# EUROPEAN PATENT APPLICATION

(11) **EP 4 779 140 A1**
(43) Date of publication of application: **22.07.2026**
(21) Application number: 26152766.7
(22) Date of filing: 19.01.2026
(51) Int. Cl.: F02C 7/36, F02K 5/00

(54) **POWER TRANSFER ASSEMBLY FOR AN AIRCRAFT PROPULSION SYSTEM**

(30) Priority: 17.01.2025 US 202519028814
(71) Applicant: RTX Corporation, Farmington, CT 06032 (US)
(72) Inventor: AKIN, John, Charlotte, 28205 (US); CHOE, Jung Muk, Glastonbury, 06033 (US); CLARK, Thomas E., Wells, 04090 (US); BREAULT, Andrew E., Bolton, 06043 (US)
(74) Representative: Dehns

(57) **Abstract**

An aircraft propulsion system (22) includes a gas turbine engine (24), a power transfer assembly (26; 126), and a controller (78). The gas turbine engine (24) includes a first spool (40) and a second spool (42). The power transfer assembly (26; 126) includes a first motor-generator (80; 128), a second motor-generator (82; 130), and a motor control assembly (76; 132). The first motor-generator (80; 128) is operably coupled with the first spool (40). The second motor-generator (82; 130) is operably coupled with the second spool (42). The motor control assembly (76; 132) is electrically connected to the first motor-generator (80; 128) and the second motor-generator (82; 130). The motor control assembly (76; 132) is configured to control an operating voltage of the power transfer assembly (26; 126). The controller (78) is connected in signal communication with the motor control assembly (76; 132). The controller (78) is configured to identify a target operating voltage of the power transfer assembly (26; 126) selected in response to an aircraft altitude input to the controller (78) and control the motor control assembly (76; 132) to control the operating voltage at the target operating voltage.

## Description

### Technical Field

This disclosure relates generally to aircraft propulsion systems and, more particularly, to power transfer assemblies for a propulsion system gas turbine engine.

### Background Information

Gas turbine engines for aircraft propulsion systems may frequently include two or more rotatable spools. Various systems and methods are known for allocating power between these rotatable spools. While these known systems and methods may be suitable for their intended purposes, there is room in the art for improvement.

### SUMMARY

According to an aspect of the present invention, an aircraft propulsion system includes a gas turbine engine, a power transfer assembly, and a controller. The gas turbine engine includes a high-pressure (HP) spool and a low-pressure (LP) spool. The power transfer assembly includes a motor-generator assembly and a motor control assembly. The motor-generator assembly includes a first motor-generator and a second motor-generator. The first motor-generator is operably coupled with the HP spool. The second motor-generator is operably coupled with the LP spool. The first motor-generator is electrically connected to the second motor-generator. The motor control assembly is electrically connected to the first motor-generator and the second motor-generator. The motor control assembly is configured to control an operating voltage of the power transfer assembly at the first motor-generator and the second motor-generator. The controller is connected in signal communication with the motor control assembly. The controller includes a processor connected in signal communication with a non-transitory memory storing instructions which, when executed by the processor, cause the processor to identify a target operating voltage of the power transfer assembly selected in response to an aircraft altitude input to the controller and control the motor control assembly to control the operating voltage at the target operating voltage.

In an embodiment of the above, identifying the target operating voltage may include identifying a first target operating voltage at a first aircraft altitude input and identifying a second different target operating voltage at a second different aircraft altitude input.

In an embodiment according to any of the previous embodiments, the first target operating voltage may be greater than the second different target operating voltage and the first aircraft altitude input may be less than the second different aircraft altitude input.

In an embodiment according to any of the previous embodiments, the target operating voltage and the aircraft altitude input may have an inverse relationship.

In an embodiment according to any of the previous embodiments, the target operating voltage may be selected from an operating voltage range between a minimum operating voltage and a maximum operating voltage.

In an embodiment according to any of the previous embodiments, identifying the target operating voltage of the power transfer assembly selected in response to the aircraft altitude input to the controller may include selecting the maximum operating voltage at a minimum altitude of the aircraft altitude input.

In an embodiment according to any of the previous embodiments, the operating voltage range may be greater than 500 volts.

In an embodiment according to any of the previous embodiments, the power transfer assembly may further include a common assembly housing, and the common assembly housing may house the first motor-generator and the second motor-generator.

In an embodiment according to any of the previous embodiments, the motor control assembly may include an alternating current (AC)-to-AC power conversion unit electrically connecting the first motor-generator and the second motor-generator.

In an embodiment according to any of the previous embodiments, the power transfer assembly may further include an alternating current (AC) bus directly electrically connecting the first motor-generator and the second motor-generator, the first motor-generator may include a first rotor, the second motor-generator may include a second rotor, the motor control assembly may include a first control unit and a second control unit, the first control unit may be electrically connected with and between the AC bus and the first rotor, and the second control unit may be electrically connected with and between the AC bus and the second rotor.

In an embodiment according to any of the previous embodiments, the instructions, when executed by the processor, may further cause the processor to control the motor control assembly in a first state or a second state, the motor control assembly in the first state operable to control the first motor-generator to apply a first rotational force to the HP spool and the second motor-generator to supply electrical power to the first motor-generator, and the motor control assembly in the second state operable to control the second motor-generator to apply a second rotational force to the LP spool and the first motor-generator to supply electrical power to the second motor-generator.

According to another aspect of the present invention, a method for operating an aircraft propulsion system includes rotating a high-pressure (HP) spool and a low-pressure (LP) spool of a gas turbine engine, operating a motor control assembly of a power transfer assembly between the HP spool and the LP spool in a first state or a second state, in the first state operating a first motor-generator coupled with the HP spool to apply a first rotational force to the HP spool and operating a second motor-generator coupled with the LP spool to supply electrical power to the first motor-generator, and in the second state operating the second motor-generator to apply a second rotational force to the LP spool and operating the first motor-generator to supply electrical power to the second motor-generator, and in the first state and the second state, controlling the motor control assembly at a controller connected in signal communication with the motor control assembly to control an operating voltage of the power transfer assembly at the first motor-generator and the second motor-generator at a target operating voltage selected at the controller in response to an aircraft altitude input to the controller.

In an embodiment according to any of the previous embodiments, the method may further include identifying, at the controller, the target operating voltage based on the aircraft altitude input to the controller by selected the target operating voltage from a range of operating voltages between a minimum operating voltage and a maximum operating voltage, and the range of operating voltages may be inversely proportional to the aircraft altitude input.

In an embodiment according to any of the previous embodiments, identifying the target operating voltage may include selecting the maximum operating voltage at a ground altitude of the aircraft altitude input.

In an embodiment according to any of the previous embodiments, identifying the target operating voltage may include selecting the minimum operating voltage at a cruise altitude of the aircraft altitude input.

In an embodiment according to any of the previous embodiments, the motor control assembly may include an alternating current (AC)-to-AC power conversion unit electrically connecting the first motor-generator and the second motor-generator and operating the motor control assembly may further include, in the first state, operating the second motor-generator to supply electrical power to the first motor-generator through the AC-to-AC power conversion unit and, in the second state, operating the first motor-generator to supply electrical power to the second motor-generator through the AC-to-AC power conversion unit.

In an embodiment according to any of the previous embodiments, the power transfer assembly may further include an alternating current (AC) bus directly electrically connecting the first motor-generator and the second motor-generator, the first motor-generator may include a first rotor, the second motor-generator may include a second rotor, the motor control assembly may include a first control unit and a second control unit, the first control unit may be electrically connected with and between the AC bus and the first rotor, the second control unit may be electrically connected with and between the AC bus and the second rotor, and operating the motor control assembly may further include, in the first state, operating the second motor-generator to supply electrical power to the first motor-generator through the AC bus and, in the second state, operating the first motor-generator to supply electrical power to the second motor-generator through the AC bus.

According to another aspect of the present invention, an aircraft propulsion system includes a power transfer assembly and a controller. The power transfer assembly includes a motor-generator assembly and a motor control assembly. The motor-generator assembly includes a first motor-generator and a second motor-generator. The motor control assembly is electrically connected to the first motor-generator and the second motor-generator. The motor control assembly is configured to control an operating voltage of the power transfer assembly at the first motor-generator and the second motor-generator. The controller is connected in signal communication with the motor control assembly. The controller includes a processor connected in signal communication with a non-transitory memory storing instructions which, when executed by the processor, cause the processor to identify a target operating voltage of the power transfer assembly selected based on an aircraft altitude input to the controller, and the target operating voltage and the aircraft altitude input have an inverse relationship and control the motor control assembly to control the operating voltage at the target operating voltage.

In an embodiment of the above, the target operating voltage may be selected from an operating voltage range between a minimum operating voltage and a maximum operating voltage.

In an embodiment according to any of the previous embodiments, identifying the target operating voltage of the power transfer assembly selected in response to the aircraft altitude input to the controller may include selecting the maximum operating voltage at a minimum altitude of the aircraft altitude input.

The foregoing features and elements may be combined in various combinations without exclusivity, unless expressly indicated otherwise. For example, aspects and/or embodiments of the present disclosure may include any one or more of the individual features or elements disclosed above and/or below alone or in any combination thereof. These features and elements as well as the operation thereof will become more apparent in light of the following description and the accompanying drawings. It should be understood, however, the following description and drawings are intended to be exemplary in nature and non-limiting.

### BRIEF DESCRIPTION OF THE DRAWINGS

FIG. 1 illustrates a perspective view of an aircraft including a propulsion system, in accordance with one or more embodiments of the present disclosure.
FIG. 2 schematically illustrates a cutaway, side view of an aircraft propulsion system including a gas turbine engine, in accordance with one or more embodiments of the present disclosure.
FIG. 3 schematically illustrates a power transfer assembly for the aircraft propulsion system, in accordance with one or more embodiments of the present disclosure.
FIG. 4 schematically illustrates another power transfer assembly for the aircraft propulsion system, in accordance with one or more embodiments of the present disclosure.
FIG. 5 schematically illustrates another power transfer assembly for the aircraft propulsion system, in accordance with one or more embodiments of the present disclosure.
FIG. 6 schematically illustrates another power transfer assembly for the aircraft propulsion system, in accordance with one or more embodiments of the present disclosure.
FIG. 7 illustrates an altitude-based operating voltage curve for the power transfer assembly, in accordance with one or more embodiments of the present disclosure.

### DETAILED DESCRIPTION

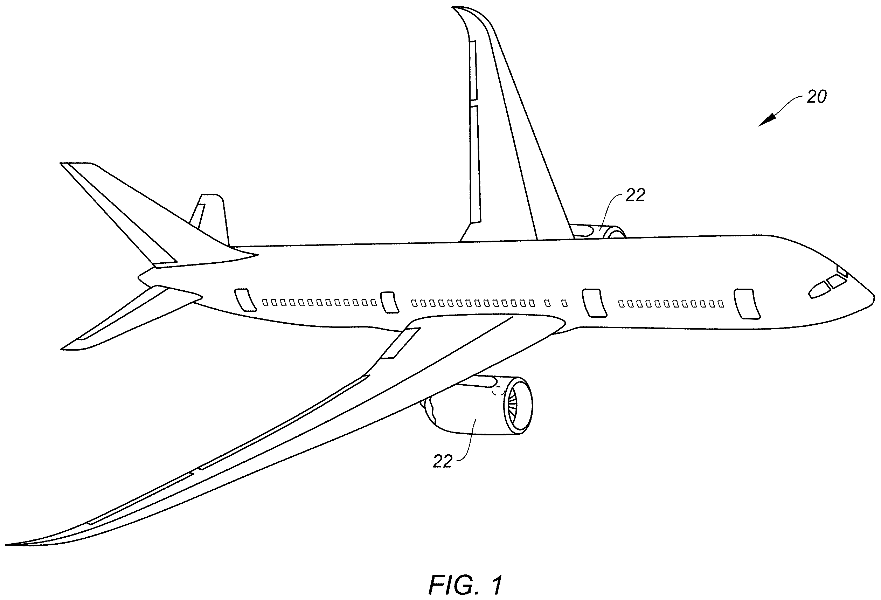

FIG. 1 illustrates an aircraft 20 including a propulsion system 22. The aircraft 20 may be a fixed-wing aircraft (e.g., an airplane) as shown, for example, in FIG. 1. The aircraft 20 may alternatively be a rotary-wing aircraft (e.g., a helicopter), a tilt-rotor aircraft, a tilt-wing aircraft, or another aerial vehicle. Moreover, the aircraft 20 may be a manned aerial vehicle or an unmanned aerial vehicle (UAV, e.g., a drone).

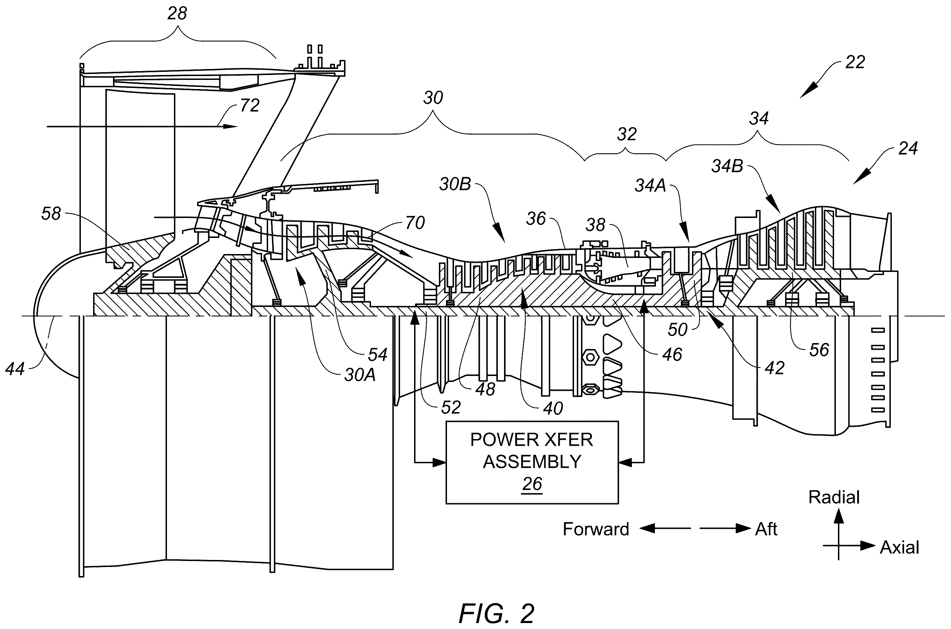

FIG. 2 schematically illustrates a cutaway, side view of the propulsion system 22. The propulsion system 22 of FIG. 2 includes a gas turbine engine 24 and an electromechanical spool power transfer assembly 26 (hereinafter "power transfer assembly"). The gas turbine engine 24 of FIG. 2 is configured as a multi-spool (e.g., two spools, three spools, etc.) turbofan gas turbine engine 24. However, while the following description and accompanying drawings may refer to the turbofan gas turbine engine 24 of FIG. 2 as an example, it should be understood that aspects of the present disclosure may be equally applicable to other types of gas turbine engines including, but not limited to, a turboshaft gas turbine engine, a turboprop gas turbine engine, a turbojet gas turbine engine, a propfan gas turbine engine, or an open rotor gas turbine engine.

The gas turbine engine 24 of FIG. 2 includes a fan section 28, a compressor section 30, a combustor section 32, a turbine section 34, and an engine static structure 36. The compressor section 30 includes a low-pressure compressor (LPC) 30A and a high-pressure compressor (HPC) 30B. The combustor section 32 includes a combustor 38 (e.g., an annular combustor). The turbine section 34 includes a high-pressure turbine (HPT) 34A and a low-pressure turbine (LPT) 34B.

Components of the fan section 28, the compressor section 30, and the turbine section 34 form a first rotational assembly 40 (e.g., a high-pressure spool) and a second rotational assembly 42 (e.g., a low-pressure spool) of the gas turbine engine 24. The first rotational assembly 40 and the second rotational assembly 42 are mounted for rotation about a rotational axis 44 (e.g., an axial centerline) of the gas turbine engine 24 relative to the engine static structure 36.

The first rotational assembly 40 includes a first shaft 46, a bladed first compressor rotor 48 for the high-pressure compressor 30B, and a bladed first turbine rotor 50 for the high-pressure turbine 34A. The first shaft 46 interconnects the bladed first compressor rotor 48 and the bladed first turbine rotor 50.

The second rotational assembly 42 includes a second shaft 52, a bladed second compressor rotor 54 for the low-pressure compressor 30A, a bladed second turbine rotor 56 for the low-pressure turbine 34B, and a bladed fan rotor 58 for the fan section 28. The second shaft 52 interconnects the bladed second compressor rotor 54 and the bladed second turbine rotor 56. The second shaft 52 may additionally interconnect the bladed fan rotor 58 with the bladed second compressor rotor 54 and the bladed second turbine rotor 56. Alternatively, the second shaft 52 may be coupled with the bladed fan rotor 58 by a gear assembly (e.g., a reduction gear box (RGB)). The first shaft 46 and the second shaft 52 are concentric and configured to rotate about the rotational axis 44. The present disclosure, however, is not limited to concentric configurations of the first shaft 46 and the second shaft 52.

The engine static structure 36 may include one or more engine cases, cowlings, bearing assemblies, inner fixed structures, and/or other non-rotating structures configured to house and/or support (e.g., rotationally support) components of the gas turbine engine sections 28, 30, 32, 34.

As will be discussed in further detail, the power transfer assembly 26 is operably coupled with the first rotational assembly 40 and the second rotational assembly 42. The power transfer assembly 26 is operable to transfer power from the first rotational assembly 40 to the second rotational assembly 42 or from the second rotational assembly 42 to the first rotational assembly 40 to facilitate more efficient operation of the rotational assemblies 40, 42, thereby reducing gas turbine engine 24 fuel consumption. The power transfer assembly 26 of the present disclosure is configured to operably couple the first rotational assembly 40 and the second rotational assembly 42 without a mechanical interconnection between the first rotational assembly 40 and the second rotational assembly 42. Accordingly, the power transfer assembly 26 may facilitate reduced mechanical complexity and more flexible packaging of power transfer components within the propulsion system 22, compared to at least some conventional mechanical coupling assemblies. While the power transfer assembly 26 is described herein for transferring power between the first rotational assembly 40 and the second rotational assembly 42 of the two-spool gas turbine engine 24 of FIG. 2, it should be understood that aspects of the present disclosure power transfer assembly 26 are equally applicable to other multi-spool (e.g., three spool) gas turbine engine configurations.

In operation of the gas turbine engine 24, ambient air is directed through the fan section 28 and into a core flow path 70 (e.g., an annular flow path) and a bypass flow path 72 (e.g., an annular flow path) by rotation of the bladed fan rotor 58. Air flow along the core flow path 70 is compressed by the low-pressure compressor 30A and the high-pressure compressor 30B, mixed and burned with fuel in the combustor 38, and then directed through the high-pressure turbine 34A and the low-pressure turbine 34B. The bladed first turbine rotor 50 and the bladed second turbine rotor 56 rotationally drive the first rotational assembly 40 and the second rotational assembly 42, respectively, in response to the combustion gas flow through the high-pressure turbine 34A and the low-pressure turbine 34B.

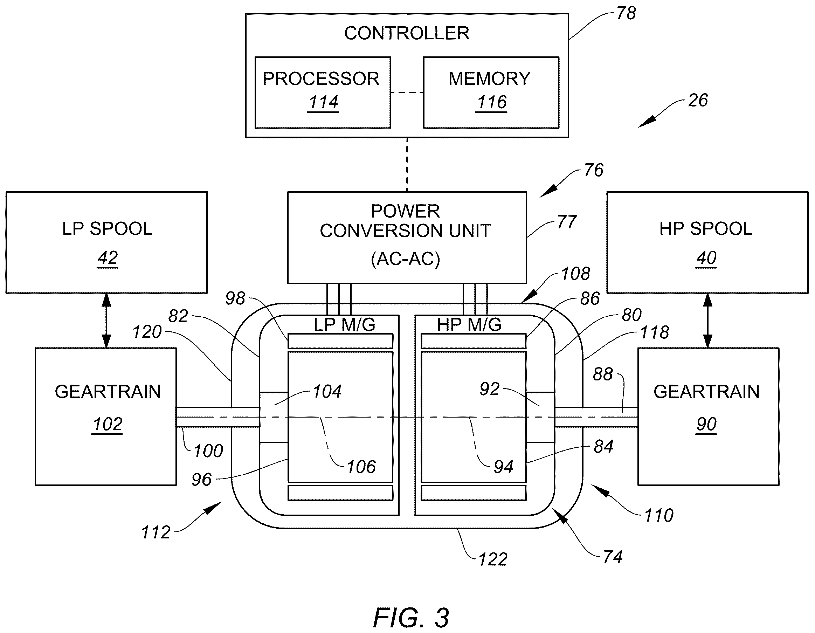

FIG. 3 schematically illustrates the power transfer assembly 26 in greater detail. The power transfer assembly 26 includes a motor-generator assembly 74, a motor control assembly 76, and a controller 78. The motor-generator assembly 74 includes, in part, a first motor-generator 80 (an "HP motor-generator") and a second motor-generator 82 (an "LP motor-generator"). The first motor-generator 80 is electrically interconnected with the second motor-generator 82 by a power conversion unit 77 of the motor control assembly 76. The power transfer assembly 26 of the present disclosure is electrically isolated from other electrical systems of the aircraft 20 and its propulsion system 22, for example, those electric systems configured for supplying electrical power for aircraft 20 environmental control systems, lighting systems, electronic communication systems, cockpit instrumentation, avionics systems, electric actuators, battery charging systems, and the like. In other words, the power transfer assembly 26 may be understood to be configured for electrical power transfer exclusively from the first motor-generator 80 to the second motor-generator 82 (e.g., through the power conversion unit 77) and from the second motor-generator 82 to the first motor-generator 80 (e.g., through the power conversion unit 77). This electrically isolated configuration of the power transfer assembly 26 may facilitate a greater range of power transfer assembly 26 operating voltages (e.g., 600-1500 volts) without concern for aircraft electrical system requirements.

The first motor-generator 80 includes a rotor 84 and a stator 86. The rotor 84 is operatively coupled with the first rotational assembly 40 (e.g., the first shaft 46). For example, a drive shaft 88 of the first motor-generator 80 may operatively couple the rotor 84 with the first rotational assembly 40. The drive shaft 88 may be coupled with the first rotational assembly 40 by a gear train 90. The gear train 90 may include, for example, an accessory gearbox (AGB) of the gas turbine engine 24 configured to drive accessories such as generators, pumps, air compressors, engine starters, and the like. The present disclosure, however, is not limited to the foregoing exemplary configuration of the gear train 90. The gear train 90 may be configured as or otherwise include a transmission, a speed change device, an epicyclic gear train, etc. In some embodiments, the motor-generator assembly 74 may include a mechanical disconnect 92 configured to selectively couple and decouple the rotor 84 and the first rotational assembly 40, for example, between the rotor 84 and the drive shaft 88. The rotor 84 of FIG. 3 is mounted for rotation about a rotational axis 94 relative to the stator 86. The first motor-generator 80 of FIG. 3 may be configured, for example, as a permanent magnet machine (PMM) having permanent magnets forming portions of the rotor 84 or the stator 86. The present disclosure, however, is not limited to any particular type or configuration of the first motor-generator 80.

The second motor-generator 82 includes a rotor 96 and a stator 98. The rotor 96 is operatively coupled with the second rotational assembly 42 (e.g., the first shaft 46). For example, a drive shaft 100 of the second motor-generator 82 may operatively couple the rotor 96 with the second rotational assembly 42. The drive shaft 100 may be coupled with the second rotational assembly 42 by a gear train 102. The gear train 102 may include, for example, a tower shaft and bevel gearbox coupling the drive shaft 100 with the second rotational assembly 42. The present disclosure, however, is not limited to the foregoing exemplary configuration of the gear train 102. The gear train 102 may be configured as or otherwise include a transmission, a speed change device, an epicyclic gear train, etc. In some embodiments, the motor-generator assembly 74 may include a mechanical disconnect 104 configured to selectively couple and decouple the rotor 96 and the second rotational assembly 42, for example, between the rotor 96 and the drive shaft 100. The rotor 96 of FIG. 3 is mounted for rotation about a rotational axis 106 relative to the stator 98. The rotational axis 106 of FIG. 3 is colinear with the rotational axis 94. In other words, the rotor 84 and the rotor 96 of FIG. 3 may be understood to have a same rotational axis. The second motor-generator 82 of FIG. 3 may be configured, for example, as a permanent magnet machine (PMM) having permanent magnets forming portions of the rotor 96 or the stator 98. The present disclosure, however, is not limited to any particular type or configuration of the second motor-generator 82.

The motor-generator assembly 74 further includes a common assembly housing 108. The common assembly housing 108 forms a mechanical housing of both the first motor-generator 80 and the second motor-generator 82. The common assembly housing 108 of FIG. 3 extends axially (e.g., relative to the rotational axes 94, 106) between and to a first axial end 110 of the common assembly housing 108 and a second axial end 112 of the common assembly housing 108. The common assembly housing 108 may include a first end wall 118, a second end wall 120, and a side wall 122. The first end wall 118 forms the first axial end 110. The second end wall 120 forms the second axial end 112. The side wall 122 extends between (e.g., axially between) and connects the first end wall 118 and the second end wall 120. The side wall 122 may extend about (e.g., completely circumferentially around) the first motor-generator 80, the second motor-generator 82, and the rotational axes 94, 106. The first end wall 118 may be disposed at (e.g., on, adjacent, or proximate) the first motor-generator 80. For example, the drive shaft 88 may extend through the first end wall 118 between the rotor 84 (or the mechanical disconnect 92) and the gear train 90. The second end wall 120 may be disposed at (e.g., on, adjacent, or proximate) the second motor-generator 82. For example, the drive shaft 100 may extend through the second end wall 120 between the rotor 96 (or the mechanical disconnect 104) and the gear train 102. The first motor-generator 80 and the second motor-generator 82 may be disposed axially adjacent one another within the common assembly housing 108. The configuration of the power transfer assembly 26 with the first motor-generator 80 and the second motor-generator 82 in the common assembly housing 108 facilitates simplified lubrication and thermal management (e.g., by a thermal management system (TMS)) of the first motor-generator 80 and the second motor-generator 82.

The power conversion unit 77 is electrically connected to the first motor-generator 80 and the second motor-generator 82. The power conversion unit 77 is an alternating current (AC) to AC (e.g., 3-phase AC) power electronic converter. In other words, the power conversion unit 77 is configured to receive an electrical power input from one of the first motor-generator 80 or the second motor-generator 82 and convert the electrical power input to an electrical power output for the other of the first motor-generator 80 or the second motor-generator 82. The power conversion unit 77 controls a voltage, current, and frequency of the electrical power output to the first motor-generator 80 or the second motor-generator 82 to control a mechanical output (e.g., rotational speed and/or torque) of the first motor-generator 80 or the second motor-generator 82 to the first rotational assembly 40 or the second rotational assembly 42, respectively. The power conversion unit 77 is connected in signal communication with the controller 78.

The controller 78 includes a processor 114 connected in signal communication with memory 116. The processor 114 may include any type of computing device, computational circuit, processor(s), central processing unit (CPU), graphics processing unit (GPU), computer, or the like capable of executing a series of instructions that are stored in the memory 116. Instructions can be directly executable or can be used to develop executable instructions. For example, instructions can be realized as executable or non-executable machine code or as instructions in a high-level language that can be compiled to produce executable or non-executable machine code. Further, instructions also can be realized as or can include data. Computer-executable instructions also can be organized in any format, including routines, subroutines, programs, data structures, objects, modules, applications, applets, functions, etc. The instructions may include an operating system, and/or executable software modules such as program files, system data, buffers, drivers, utilities, and the like. The executable instructions may apply to any functionality described herein to enable the controller 78 and its processor 114 to accomplish the same algorithmically and/or coordination of the power transfer assembly 26 components including the power conversion unit 77. The memory 116 may include a single memory device or a plurality of memory devices (e.g., a computer-readable storage device that can be read, written, or otherwise accessed by a general purpose or special purpose computing device, including any processing electronics and/or processing circuitry capable of executing instructions). The present disclosure is not limited to any particular type of memory device, which may be non-transitory, and may include read-only memory, random access memory, volatile memory, non-volatile memory, static memory, dynamic memory, flash memory, cache memory, volatile or non-volatile semiconductor memory, optical disk storage, magnetic disk storage, magnetic tape, other magnetic storage devices, or any other medium capable of storing one or more instructions, and/or any device that stores digital information. The memory device(s) may be directly and/or indirectly coupled to the controller 78. The controller 78 may include, or may be in communication with, a user interface including one or more inputs devices and/or one or more output devices, for example, an input device that enables a user to enter data and/or instructions and an output device configured to display information (e.g., a visual display or a printer), or to transfer data, etc. Communications between the controller 78 and external electrical or electronic devices may be via a hardwire connection or via a wireless connection. A person of skill in the art will recognize that portions of the controller 78 may assume various forms (e.g., digital signal processor, analog device, etc.).

The controller 78 may form or otherwise be part of an electronic engine controller (EEC) for the gas turbine engine 24. The EEC may control operating parameters of the gas turbine engine 24 including, but not limited to, fuel flow, stator vane positions, compressor air bleed valve positions, shaft (e.g., first shaft 46 and/or second shaft 52) torque and/or rotation speed, etc. so as to control an engine power or performance of the gas turbine engine 24. In some embodiments, the EEC may be part of a full authority digital engine control (FADEC) system for the gas turbine engine 24. In some other embodiments, the controller 78 may be part of the power conversion unit 77, and configured to control functions of the power conversion unit 77 to convert electrical power between the first motor-generator 80 and the second motor-generator 82.

In operation, the power transfer assembly 26 transfers power from the first rotational assembly 40 to the second rotational assembly 42 or from the second rotational assembly 42 to the first rotational assembly 40 by operation of the motor-generator assembly 74 and the power conversion unit 77. For example, the second rotational assembly 42 may drive rotation of the rotor 96 causing the second motor-generator 82 to generate the electrical power input to the power conversion unit 77. The controller 78 may control the power conversion unit 77 to convert this AC electrical power input to an AC electrical power output supplied to the first motor-generator 80. The controller 78 may control a voltage, current, and frequency of this electrical power output to control the rotation speed and/or torque of the rotor 84 and, thereby, control a rotational force applied by the rotor 84 to the first rotational assembly 40 (e.g., through the gear train 90). For example, the power transfer assembly 26 may transfer power from the second rotational assembly 42 to the first rotational assembly 40 during an idle operating condition of the gas turbine engine 24 where second rotational assembly 42 power may be greater than necessary for the idle operating condition. Similarly, for example, the first rotational assembly 40 may drive rotation of the rotor 84 causing the first motor-generator 80 to generate the electrical power input to the power conversion unit 77. The controller 78 may control the power conversion unit 77 to convert this AC electrical power input to an AC electrical power output supplied to the second motor-generator 82. The controller 78 may control a voltage, current, and frequency of this electrical power output to control the rotation speed and/or torque of the rotor 96 and, thereby, control a rotational force applied by the rotor 96 to the second rotational assembly 42 (e.g., through the gear train 102).

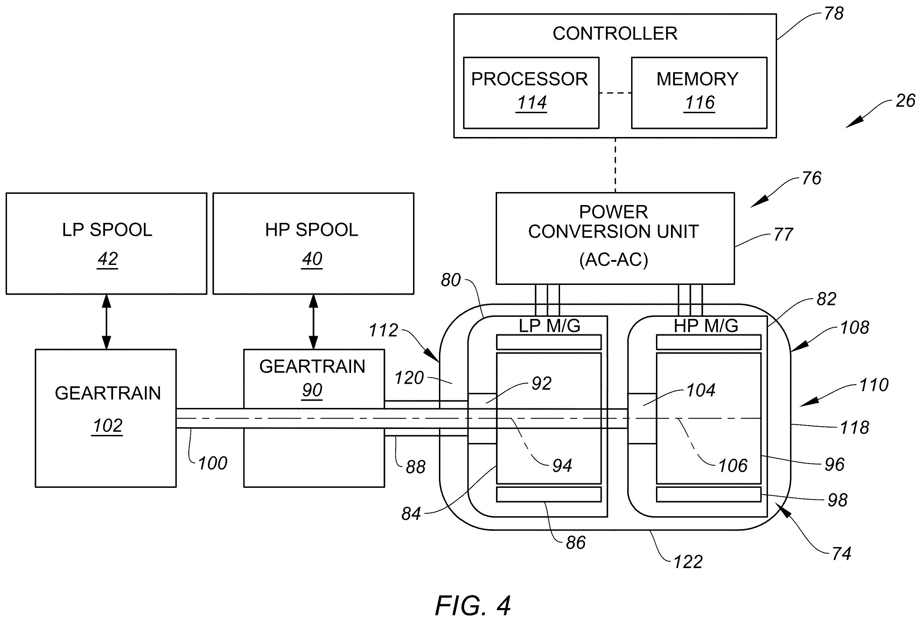

Referring to FIG. 4, in some embodiments, the drive shafts 88, 100 may be coaxial. In other words, the drive shaft 88 and the drive shaft 100 may be disposed axially coincident with one another along their respective rotational axes 94, 106, which rotational axes 94, 106 are colinear as described above. The drive shaft 100 of FIG. 4 extends along the rotational axis 106 from the second motor-generator 82 (or the mechanical disconnect 104) through the first motor-generator 80, the drive shaft 88, and the gear train 90 to the gear train 102. For example, as shown in FIG. 4, each of the drive shafts 88, 100 extends through the second end wall 120. Of course, this configuration of the motor-generator assembly 74 may alternatively be reversed with the drive shaft 88 extending along the rotational axis 94 from the first motor-generator 80 (or the mechanical disconnect 92) through the second motor-generator 82, the drive shaft 100, and the gear train 102 to the gear train 90.

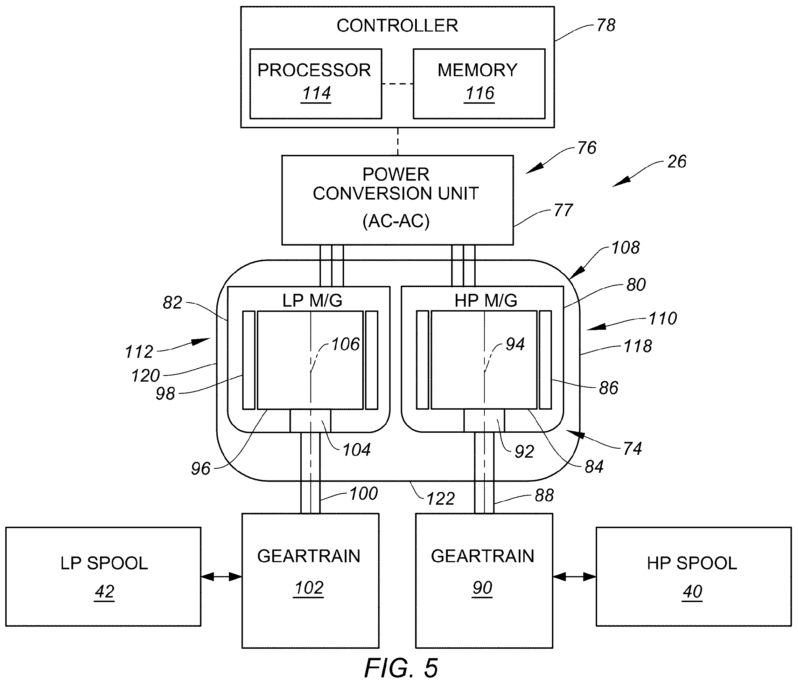

Referring to FIG. 5, in some embodiments, the drive shafts 88, 100 may have a parallel arrangement. In other words, the drive shaft 88 and the drive shaft 100 may be oriented along their respective rotational axes 94, 106, which rotational axes 94, 106 may be parallel or substantially parallel. As shown in FIG. 5, for example, each of the drive shafts 88, 100 extends through the side wall 122.

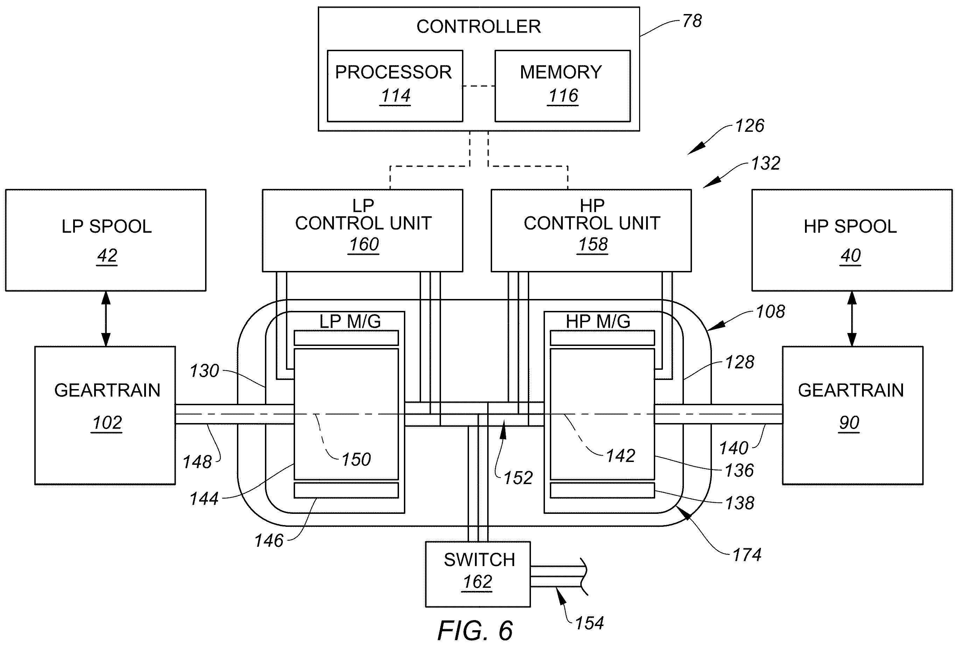

FIG. 6 schematically illustrates another power transfer assembly 126 for an aircraft propulsion system such as the propulsion system 22 (see FIGS. 1-2). The power transfer assembly 126 of FIG. 6 includes the controller 78, the common assembly housing 108, a motor-generator assembly 174, and a motor control assembly 132. The motor-generator assembly 174 includes a first motor-generator 128 and a second motor-generator 130.

The first motor-generator 128 includes a rotor 136 and a stator 138. The rotor 136 is operatively coupled with the first rotational assembly 40 (e.g., the first shaft 46). For example, a drive shaft 140 of the first motor-generator 128 may operatively couple the rotor 136 with the first rotational assembly 40. The drive shaft 140 may be coupled with the first rotational assembly 40 by the gear train 90. The first motor-generator 128 is disposed within (e.g., housed by) the common assembly housing 108. The rotor 136 of FIG. 6 is mounted for rotation about a rotational axis 142 relative to the stator 138. The first motor-generator 128 of FIG. 6 has an orientation of the rotor 136 and its rotational axis 142 similar to that of the first motor-generator 80 of FIG. 3, however, the first motor-generator 128 may have alternative orientations (see, e.g., the first motor-generator 80 of FIGS. 4 and 5) as well. The first motor-generator 128 of FIG. 6 is configured as a wound-field synchronous machine (WFSM). In particular, rotor windings of the rotor 136 are excited by a direct current (DC) source (e.g., the first control unit 158) to form a constant magnetic field while stator windings of the stator 138 receive (e.g., during motoring operation) or form (e.g., during generating operation) an AC current (e.g., 3-phase AC).

The second motor-generator 130 includes a rotor 144 and a stator 146. The rotor 144 is operatively coupled with the second rotational assembly 42 (e.g., the second shaft 52). For example, a drive shaft 148 of the second motor-generator 130 may operatively couple the rotor 144 with the second rotational assembly 42. The drive shaft 148 may be coupled with the second rotational assembly 42 by the gear train 102. The second motor-generator 130 is disposed within (e.g., housed by) the common assembly housing 108. The rotor 144 of FIG. 6 is mounted for rotation about a rotational axis 150 relative to the stator 146. The second motor-generator 130 of FIG. 6 has an orientation of the rotor 144 and its rotational axis 150 similar to that of the second motor-generator 82 of FIG. 3, however, the second motor-generator 130 may have alternative orientations (see, e.g., the second motor-generator 82 of FIGS. 4 and 5) as well. Like the first motor-generator 128, the second motor-generator 130 of FIG. 6 is configured as a wound-field synchronous machine (WFSM).

The first motor-generator 128 and the second motor-generator 130 are electrically connected together (e.g., directly connected together) by an AC bus 152 (e.g., a 3-phase AC bus) of the power transfer assembly 126. For example, the rotor windings of the rotor 136 may be electrically connected with the rotor windings of the rotor 144 by the AC bus 152. The AC bus 152 is disposed within (e.g., entirely within) the common assembly housing 108. Like the power transfer assembly 26 (see FIG. 2), the power transfer assembly 126 and, in particular, its AC bus 152 may be electrically isolated from other electrical systems of the aircraft 20 and its propulsion system 22 (see FIG. 1), for example, those electric systems configured for supplying electrical power for aircraft 20 environmental control systems, lighting systems, electronic communication systems, cockpit instrumentation, avionics systems, electric actuators, battery charging systems, and the like. In other words, the power transfer assembly 126 may be understood to be configured for electrical power transfer exclusively from the first motor-generator 128 to the second motor-generator 130 (e.g., through the AC bus 152) and from the second motor-generator 130 to the first motor-generator 128 (e.g., through the AC bus 152).

In some embodiments, however, the AC bus 152 may be configured to be electrically connected with an electrical distribution system 154 of the aircraft 20 and/or its propulsion system 22. In these embodiments, under some operating conditions, the power transfer assembly 126 (e.g., the AC bus 152) may be electrically connected with the electrical distribution system 154 to receive electrical power from electrical distribution system 154 and/or to supply electrical power to the electrical distribution system 154. For example, the power transfer assembly 126 may receive electrical power at the AC bus 152 from the electrical distribution system 154 during a startup sequence for the gas turbine engine 24 to facilitate applying rotational force to the first rotational assembly 40 and/or the second rotational assembly 42 with the first motor-generator 128 and/or the second motor-generator 130, respectively. For further example, in some emergency conditions such as a loss of electrical power generation or storage for the electrical distribution system 154, the power transfer assembly 126 may generate and transmit electrical power to the electrical distribution system 154 from the AC bus 152. The AC bus 152 may be selectively electrically connected with the electrical distribution system 154 by a switch assembly 162 (e.g., a breaker, a switch, a contactor, etc.) to facilitate electrical connection and isolation of the AC bus 152 from the electrical distribution system 154 (e.g., by the controller 78). While the power transfer assembly 126 of FIG. 6 (e.g., the AC bus 152) may be configured for electrical interconnection with an electrical system of the aircraft 20 and/or its propulsion system 22 (e.g., the electrical distribution system 154) as described above, aspects and embodiments of the power transfer assemblies 26, 126 of the present disclosure should be understood, in this detailed description and in the claims, to be electrically isolated from other electrical systems of the aircraft 20 and its propulsion system 22 unless expressly described otherwise.

The motor control assembly 132 of FIG. 6 includes a first control unit 158 and a second control unit 160. The first control unit 158 is electrically connected with the AC bus 152 and the first motor-generator 128 (e.g., the rotor 136). The first control unit 158 is operable to receive an electrical power input from the AC bus 152 and, using the electrical power input, generate a DC power output to the rotor 136 to control the constant magnetic field of the rotor 136 (e.g., the rotor windings) to control, in turn, an electrical or mechanical output of the first motor-generator 128. The first control unit 158 is connected in signal communication with the controller 78 to facilitate control of the first motor-generator 128 and the first control unit 158 by the controller 78. The second control unit 160 is electrically connected with the AC bus 152 and the second motor-generator 130 (e.g., the rotor 144). The second control unit 160 is operable to receive an electrical power input from the AC bus 152 and, using the electrical power input, generate a DC power output to the rotor 144 to control the constant magnetic field of the rotor 144 (e.g., the rotor windings) to control, in turn, an electrical or mechanical output of the second motor-generator 130. The second control unit 160 is connected in signal communication with the controller 78 to facilitate control of the second motor-generator 130 and the second control unit 160 by the controller 78. While the first control unit 158 and the second control unit 160 are illustrated and described as discrete control units, the power transfer assembly 126 may alternatively include a single control unit configured to control both the first motor-generator 128 and the second motor-generator 130.

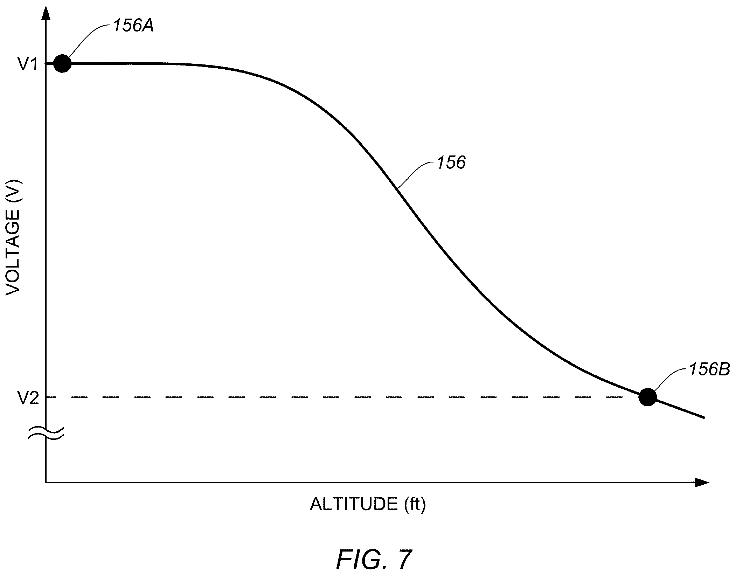

Referring to FIG. 7, in some embodiments, the power transfer assembly 26, 126 may be operable with an altitude-variable operating voltage, for example, at the first motor-generator 80, 128 and the second motor-generator 82, 130. The motor control assembly 76, 132 (e.g., the power conversion unit 77 or the control units 158, 160) may be operable to control the operating voltage within an operating voltage range between a minimum operating voltage and a maximum operating voltage. The operating voltage range may be greater than 300 volts (V), or greater than 500V, or still greater than 1000V. For example, the motor control assembly 76, 132 may be selectively operable to set an operating voltage of the power transfer assembly 26, 126 at or between 700 V and 1500 V; however, the present disclosure, is not limited to any particular values of the minimum operating voltage or the maximum operating voltage. The operating voltage may be an electrical power output of the power conversion unit 77 (see FIGS. 3-5) to the first motor-generator 80 or the second motor-generator 82 (e.g., the motoring motor-generator). The operating voltage may alternatively be a bus voltage of the AC bus 152 (see FIG. 6). The controller 78 may select (e.g., identify) a target operating voltage of the power transfer assembly 26, 126 based on a present altitude (e.g., a measured or otherwise determined altitude) of the aircraft 20 (see FIG. 1). The controller 78 may then control the motor control assembly 76, 132 to set the operating voltage of the power transfer assembly 26, 126 at the target operating voltage. In general, the controller 78 may select the target operating voltage such that the operating voltage is high at lower altitudes and the operating voltage is low at higher altitudes. In other words, the target operating voltage and aircraft altitude may have an inverse relationship. As shown in FIG. 7, the altitude-based operating voltage may be characterized by a voltage curve 156 having a voltage which decreases as an altitude of the aircraft 20 increases within the altitude limitations of the aircraft 20. For example, a first selected operating voltage V1 (e.g., the maximum operating voltage) at a first altitude 156A (e.g., a grounded condition of the aircraft 20) may be greater than a second selected operating voltage V2 at a second higher altitude 156B (e.g., a cruising altitude of the aircraft 20). The grounded condition of the aircraft 20 may be characterized, for example, by a minimum altitude at the aircraft 20 location (e.g., a ground altitude or range of ground altitudes relative to sea level). The controller 78 may select the target operating voltage of the power transfer assembly 26, 126 in response to an altitude input using instructions (e.g., a lookup table, algorithm, model, etc.) stored in the memory 116 and executed by the processor 114.

During grounded conditions of the aircraft 20, low shaft 46, 52 (see FIG. 2) speeds may contribute to higher electrical currents of the power transfer assembly 26, 126, thereby causing increased power transfer assembly 26, 126 (e.g., motor-generator 80, 82, 128, 130) heat loading on a thermal management system (TMS) for the power transfer assembly 26, 126. Moreover, where the TMS for the power transfer assembly 26, 126 may be air cooled, the typically reduced aircraft 20 airspeeds at lower altitudes or grounded conditions may limit TMS cooling for the power transfer assembly 26, 126. Accordingly, by operating the power transfer assembly 26, 126 at higher operating voltages for lower altitude conditions, the operating electrical current of the power transfer assembly 26, 126 may be reduced, thereby reducing TMS loading and facilitating smaller TMS sizing. In contrast, at higher altitudes (e.g., cruising altitudes), higher shaft 46, 52 speeds and greater TMS air flow (e.g., due to higher airspeed) facilitate more effective cooling of the power transfer assembly 26, 126. Accordingly, the power transfer assembly 26, 126 may be operated at lower operating voltages to facilitate reduced risk of partial discharge and/or electrical arcing.

In some embodiments, the power transfer assembly 26, 126 may be operable with an altitude-variable operating voltage and with the AC bus 152 electrically connected with the electrical distribution system 154 of the aircraft 20 and/or its propulsion system 22. For example, in some embodiments in which the power transfer assembly 26, 126 may be configured to supply all or a substantial portion of electrical power to the electrical distribution system 154 (e.g., drones, turbogenerator configurations, etc.), the power transfer assembly 26, 126 may be operated to control an operating voltage of the electrical distribution system 154 based on an aircraft altitude, as described above.

While the principles of the disclosure have been described above in connection with specific apparatuses and methods, it is to be clearly understood that this description is made only by way of example and not as limitation on the scope of the disclosure. Specific details are given in the above description to provide a thorough understanding of the embodiments. However, it is understood that the embodiments may be practiced without these specific details.

It is noted that the embodiments may be described as a process which is depicted as a flowchart, a flow diagram, a block diagram, etc. Although any one of these structures may describe the operations as a sequential process, many of the operations can be performed in parallel or concurrently. In addition, the order of the operations may be rearranged. A process may correspond to a method, a function, a procedure, a subroutine, a subprogram, etc.

The singular forms "a," "an," and "the" refer to one or more than one, unless the context clearly dictates otherwise. For example, the term "comprising a specimen" includes single or plural specimens and is considered equivalent to the phrase "comprising at least one specimen." The term "or" refers to a single element of stated alternative elements or a combination of two or more elements unless the context clearly indicates otherwise. As used herein, "comprises" means "includes." Thus, "comprising A or B," means "including A or B, or A and B," without excluding additional elements.

It is noted that various connections are set forth between elements in the present description and drawings (the contents of which are included in this disclosure by way of reference). It is noted that these connections are general and, unless specified otherwise, may be direct or indirect and that this specification is not intended to be limiting in this respect. Any reference to attached, fixed, connected, or the like may include permanent, removable, temporary, partial, full and/or any other possible attachment option.

The terms "substantially," "about," "approximately," and other similar terms of approximation used throughout this patent application are intended to encompass variations or ranges that are reasonable and customary in the relevant field. These terms should be construed as allowing for variations that do not alter the basic essence or functionality of the invention. Such variations may include, but are not limited to, variations due to manufacturing tolerances, materials used, or inherent characteristics of the elements described in the claims, and should be understood as falling within the scope of the claims unless explicitly stated otherwise.

No element, component, or method step in the present disclosure is intended to be dedicated to the public regardless of whether the element, component, or method step is explicitly recited in the claims. As used herein, the terms "comprise", "comprising", or any other variation thereof, are intended to cover a non-exclusive inclusion, such that a process, method, article, or apparatus that comprises a list of elements does not include only those elements but may include other elements not expressly listed or inherent to such process, method, article, or apparatus.

While various inventive aspects, concepts and features of the disclosures may be described and illustrated herein as embodied in combination in the exemplary embodiments, these various aspects, concepts, and features may be used in many alternative embodiments, either individually or in various combinations and sub-combinations thereof. Unless expressly excluded herein all such combinations and sub-combinations are intended to be within the scope of the present application. Still further, while various alternative embodiments as to the various aspects, concepts, and features of the disclosures--such as alternative materials, structures, configurations, methods, devices, and components, and so on--may be described herein, such descriptions are not intended to be a complete or exhaustive list of available alternative embodiments, whether presently known or later developed. Those skilled in the art may readily adopt one or more of the inventive aspects, concepts, or features into additional embodiments and uses within the scope of the present application even if such embodiments are not expressly disclosed herein. For example, in the exemplary embodiments described above within the Detailed Description portion of the present specification, elements may be described as individual units and shown as independent of one another to facilitate the description. In alternative embodiments, such elements may be configured as combined elements.

## Claims

1. An aircraft propulsion system (22) comprising:
a gas turbine engine (24) including a high-pressure (HP) spool (40) and a low-pressure (LP) spool (42);
a power transfer assembly (26; 126) including a motor-generator assembly (74; 174) and a motor control assembly (76; 132), the motor-generator assembly (74; 174) including a first motor-generator (80; 128) and a second motor-generator (82; 130), the first motor-generator (80; 128) operably coupled with the HP spool (40), the second motor-generator (82; 130) operably coupled with the LP spool (42), the first motor-generator (80; 128) electrically connected to the second motor-generator (82; 130), the motor control assembly (76; 132) electrically connected to the first motor-generator (80; 128) and the second motor-generator (82; 130), the motor control assembly (76; 132) configured to control an operating voltage of the power transfer assembly (26; 126) at the first motor-generator (80; 128) and the second motor-generator (82; 130); and
a controller (78) connected in signal communication with the motor control assembly (76; 132), the controller (78) including a processor (114) connected in signal communication with a non-transitory memory (116) storing instructions which, when executed by the processor (114), cause the processor (114) to:
identify a target operating voltage of the power transfer assembly (26; 126) selected in response to an aircraft altitude input to the controller (78); and
control the motor control assembly (76; 132) to control the operating voltage at the target operating voltage.

2. The aircraft propulsion system (22) of claim 1, wherein identifying the target operating voltage includes identifying a first target operating voltage at a first aircraft altitude input and identifying a second different target operating voltage at a second different aircraft altitude input.

3. The aircraft propulsion system (22) of claim 2, wherein the first target operating voltage is greater than the second different target operating voltage and the first aircraft altitude input is less than the second different aircraft altitude input.

4. The aircraft propulsion system (22) of claim 1, 2 or 3, wherein the target operating voltage and the aircraft altitude input have an inverse relationship.

5. The aircraft propulsion system (22) of any preceding claim, wherein the target operating voltage is selected from an operating voltage range between a minimum operating voltage and a maximum operating voltage, and optionally the operating voltage range is greater than 500 volts.

6. The aircraft propulsion system (22) of claim 5, wherein identifying the target operating voltage of the power transfer assembly (26; 126) selected in response to the aircraft altitude input to the controller (78) includes selecting the maximum operating voltage at a minimum altitude of the aircraft altitude input.

7. The aircraft propulsion system (22) of any preceding claim, wherein the power transfer assembly (26; 126) further includes a common assembly housing (108), and the common assembly housing (108) houses the first motor-generator (80; 128) and the second motor-generator (82; 130).

8. The aircraft propulsion system of any preceding claim, wherein the motor control assembly (76) includes an alternating current (AC)-to-AC power conversion unit (77) electrically connecting the first motor-generator (80) and the second motor-generator (82), or
wherein the power transfer assembly (126) further includes an alternating current (AC) bus (152) directly electrically connecting the first motor-generator (128) and the second motor-generator (130), the first motor-generator (128) includes a first rotor (136), the second motor-generator (130) includes a second rotor (144), the motor control assembly (132) includes a first control unit (158) and a second control unit (160), the first control unit (158) is electrically connected with and between the AC bus (152) and the first rotor (136), and the second control unit (160) is electrically connected with and between the AC bus (152) and the second rotor (144).

9. The aircraft propulsion system (22) of any preceding claim, wherein the instructions, when executed by the processor (114), further cause the processor (114) to control the motor control assembly (76; 132) in a first state or a second state, the motor control assembly (76; 132) in the first state operable to control the first motor-generator (80; 128) to apply a first rotational force to the HP spool (40) and the second motor-generator (82; 130) to supply electrical power to the first motor-generator (80; 128), and the motor control assembly (76; 132) in the second state operable to control the second motor-generator (82; 130) to apply a second rotational force to the **LP** spool (42) and the first motor-generator (80; 128) to supply electrical power to the second motor-generator (82; 130).

10. A method for operating an aircraft propulsion system (22), the method comprising:
rotating a high-pressure (HP) spool (40) and a low-pressure (LP) spool (42) of a gas turbine engine (24);
operating a motor control assembly (76; 132) of a power transfer assembly (26; 126) between the HP spool (40) and the LP spool (42) in a first state or a second state, in the first state operating a first motor-generator (80; 128) coupled with the HP spool (40) to apply a first rotational force to the HP spool (40) and operating a second motor-generator (82; 130) coupled with the LP spool (42) to supply electrical power to the first motor-generator (80; 128), and in the second state operating the second motor-generator (82; 130) to apply a second rotational force to the LP spool (42) and operating the first motor-generator (80; 128) to supply electrical power to the second motor-generator (82; 130); and
in the first state and the second state, controlling the motor control assembly (76; 132) at a controller (78) connected in signal communication with the motor control assembly (76; 132) to control an operating voltage of the power transfer assembly (26; 126) at the first motor-generator (80; 128) and the second motor-generator (82; 130) at a target operating voltage selected at the controller (78) in response to an aircraft altitude input to the controller (78).

11. The method of claim 10, further comprising identifying, at the controller (78), the target operating voltage based on the aircraft altitude input to the controller (78) by selected the target operating voltage from a range of operating voltages between a minimum operating voltage and a maximum operating voltage, and the range of operating voltages is inversely proportional to the aircraft altitude input.

12. The method of claim 11, wherein identifying the target operating voltage includes selecting the maximum operating voltage at a ground altitude of the aircraft altitude input.

13. The method of claim 11 or 12, wherein identifying the target operating voltage includes selecting the minimum operating voltage at a cruise altitude of the aircraft altitude input.

14. The method of any of claims 10 to 13, wherein the motor control assembly (76) includes an alternating current (AC)-to-AC power conversion unit (77) electrically connecting the first motor-generator (80) and the second motor-generator (82) and operating the motor control assembly (76) further includes, in the first state, operating the second motor-generator (82) to supply electrical power to the first motor-generator (80) through the AC-to-AC power conversion unit (77) and, in the second state, operating the first motor-generator (80) to supply electrical power to the second motor-generator (82) through the AC-to-AC power conversion unit (77).

15. The method of any of claims 10 to 13, wherein the power transfer assembly (126) further includes an alternating current (AC) bus (152) directly electrically connecting the first motor-generator (128) and the second motor-generator (130), the first motor-generator (128) includes a first rotor (136), the second motor-generator (130) includes a second rotor (144), the motor control assembly (132) includes a first control unit (158) and a second control unit (160), the first control unit (158) is electrically connected with and between the AC bus (152) and the first rotor (136), the second control unit (160) is electrically connected with and between the AC bus (152) and the second rotor (144), and operating the motor control assembly (132) further includes, in the first state, operating the second motor-generator (130) to supply electrical power to the first motor-generator (128) through the AC bus (152) and, in the second state, operating the first motor-generator (128) to supply electrical power to the second motor-generator (130) through the AC bus (152).
